# EUROPÄISCHE PATENTSCHRIFT

(11) **EP 2 650 740 B1**
(45) Veröffentlichungstag und Bekanntmachung des Hinweises auf die Patenterteilung: **13.11.2019**
(21) Anmeldenummer: 12163749.0
(22) Anmeldetag: 11.04.2012
(51) Int. Cl.: G05B 19/042, H04L 12/24, H04W 52/02

(54) **Verfahren zum Einrichten einer temporären Empfangsbereitschaft eines Feldgeräts und Messsystem**
Method for setting up a field device to be temporarily prepared for reception and measuring system
Procédé de création d'un état de réception temporaire d'un appareil de terrain et système de mesure

(43) Veröffentlichungstag der Anmeldung: 16.10.2013
(73) Patentinhaber: VEGA Grieshaber KG, 77709 Wolfach (DE)
(72) Erfinder: Schaetzle, Ralf, 77716 Fischerbach (DE); Faist, Fridolin, 77709 Oberwolfach (DE); Isenmann, Andreas, 77716 Haslach (DE)
(74) Vertreter: Maiwald Patent- und Rechtsanwaltsgesellschaft mbH

(56) Entgegenhaltungen:
- EP-A1- 2 068 213
- EP-A1- 2 187 281
- EP-A1- 2 437 128
- EP-A2- 2 354 870

## Beschreibung

### Gebiet der Erfindung

Die Erfindung betrifft Messsysteme mit Feldgeräten der Prozessautomatisierung. Insbesondere betrifft die Erfindung ein Verfahren zum Einrichten einer temporären Empfangsbereitschaft eines Feldgeräts der Prozessautomatisierung, ein Feldgerät zum Messen einer Prozessgröße, einen Server für ein Feldgerät, ein Messsystem mit einem Feldgerät und einen Server, Programmelemente und ein computerlesbares Medium.

### Technologischer Hintergrund

Bei einem Messsystem, wie beispielsweise VEGA WEB-VV, werden von den Feldgeräten Messwerte über das Internet an einen zentralen Server gesendet. Die Datenübermittlung vom Feldgerät kann zeit- oder ereignisgesteuert erfolgen. Der Sendezeitpunkt, das Sendeintervall oder das Sendeereignis wird bei der Inbetriebnahme des Feldgerätes vor Ort im Feldgerät durch entsprechende Parametrierung eingestellt.

Um beispielsweise diese Einstellungen zu einem späteren Zeitpunkt zu verändern, ist es nötig, dass das Feldgerät erreichbar ist. Handelt es sich bei den Feldgeräten um netzgespeiste Feldgeräte mit einem angeschlossenen Modem, so können diese aus der Ferne über eine kabellose Kommunikationsverbindung zu jeder Zeit kontaktiert werden.

Handelt es sich bei dem Feldgerät aber um ein batteriegespeistes Messgerät, wie VEGA PLICSMOBILE, ist dieses Feldgerät üblicherweise so eingestellt, dass es nur einmal täglich Daten an den Web-VV-Server versendet und sich ansonsten im Energiesparmodus befindet. Im Energiesparmodus ist das Feldgerät aus der Ferne, beispielsweise über eine GSM/GPRS-Verbindung, nicht erreichbar. Änderungen im Gerät können in diesem Fall nur direkt vor Ort durchgeführt werden.

Änderungen für das Feldgerät können auf einem Server zwischengespeichert werden und dann bei einem Verbindungsaufbau des Feldgerätes vom Server an das Feldgerät übertragen werden.

Die EP 2 068 213 A1 offenbart eine Fertigungseinrichtung, die eine Fertigungsmaschine zur Durchführung eines Fertigungsschrittes in einem Fertigungsabschnitt an einem Produktteil, eine Steuerung für den Fertigungsabschnitt, ein Fertigungsdatensystem zur Erfassung von Betriebszuständen der Fertigungseinrichtung und einen Sensor zur Aufnahme eines Messwertes für die Steuerung umfasst. Der Sensor ist drahtlos mit einem autarken Energiespeicher ausgeführt und arbeitet in einem Aktivitätszyklus, welcher Aktivphasen und Ruhephasen aufweist. Am Aktivitätszyklus ist ein zeitlicher Ruheanteil der Ruhephasen einstellbar, wobei die Einstellung des Ruheanteils zu einem Betriebszeitpunkt abhängig von einem aus dem Fertigungsdatensystem abgeleiteten Erwartungs-Betriebszustand zu diesem Betriebszeitpunkt erfolgt.

### Zusammenfassung der Erfindung

Es ist eine Aufgabe der Erfindung, die Fernwartung und Prametrierung von Feldgeräten zu erleichtern.

Diese Aufgabe wird durch die Merkmale der unabhängigen Patentansprüche gelöst. Weiterbildungen der Erfindung ergeben sich aus den Unteransprüchen und der folgenden Beschreibung.

Gemäß einem ersten Aspekt der Erfindung ist ein Feldgerät zum Messen einer Prozessgröße angegeben, welches eine Sende- und Empfangseinheit und eine Steuereinheit aufweist. Die Sende- und Empfangseinheit ist zum Senden von Daten an einen externen Server oder einen anderweitigen Empfänger und zum Empfangen von Daten von dem Server oder dem anderweitigen Empfänger ausgeführt. Die Steuereinheit dient dem Überführen des Feldgeräts von einem sog. Energiesparmodus in einen Sende-/Empfangsmodus. Auch kann die Steuereinheit das Feldgerät von dem Sende-/Empfangsmodus in den Energiesparmodus überführen, wenn das Zeitintervall für die Kommunikation zwischen Feldgerät und Server abgelaufen ist.

Befindet sich das Feldgerät in dem Sende-/Empfangsmodus, so kann der Server dem Feldgerät Informationen übertragen, welche einen späteren Zeitpunkt für das Überführen des Feldgeräts von dem Energiesparmodus in den Sende-/Empfangsmodus definieren.

In anderen Worten kann der Server, nachdem das Feldgerät eine Verbindung zu ihm aufgebaut hat, dem Feldgerät mitteilen, wann (also zu welchem Zeitpunkt) es von dem Energiesparmodus in den Sendeempfangsmodus wechseln soll.

Der Server kann also das Zeitfenster für eine spätere Kommunikation mit dem Feldgerät selber bestimmen und dieses dem Feldgerät mitteilen. Innerhalb dieses Zeitfensters ist das Feldgerät dann aus der Ferne erreichbar, so dass beispielsweise eine Fernwartung des Feldgeräts erfolgen kann.

Die entsprechende Wahl des Zeitfensters durch den Server kann beispielsweise in jenen Fällen vorteilhaft sein, in denen eine Fehlfunktion des Feldgeräts regelmäßig zu einem bestimmten Zeitpunkt am Tag auftritt, der außerhalb des normalen Zeitintervalls für den Datenaustausch zwischen Server und Feldgerät liegt. Legt nun der Server das Zeitintervall für einen Datenaustausch auf diesen bestimmten Zeitpunkt, kann der Fehler genauer analysiert werden und es können daraufhin Maßnahmen ergriffen werden, diesen Fehler zu beheben.

Gemäß einer Ausführungsform der Erfindung weist das Feldgerät eine feldgeräteinterne Energieversorgung auf. Hierbei kann es sich beispielsweise um eine Batterie oder einen Akkumulator handeln. Auch können alternativ oder zusätzlich Solarzellen vorgesehen sein.

Beispielsweise ist das Feldgerät nicht an eine externe Energieversorgung angeschlossen. Natürlich ist es auch möglich, dass das Feldgerät drahtgebunden arbeitet und an einen Datenbus angeschlossen ist, über den es auch mit elektrischer Energie versorgt werden kann. Alternativ oder zusätzlich zum Anschluss an den Datenbus kann eine Drahtlosschnittstelle in Form eines Funkmodems vorgesehen sein, mit Hilfe derer das Feldgerät drahtlos mit dem Server kommunizieren kann. Diese Drahtlosschnittstelle kann dann zur Fernwartung eingesetzt werden.

Gemäß einer weiteren Ausführungsform der Erfindung ist also die Sende- und Empfangseinheit zum drahtlosen Senden und Empfangen der Daten ausgeführt.

Gemäß einer weiteren Ausführungsform der Erfindung handelt es sich bei dem Feldgerät um ein Füllstandmessgerät, um ein Druckmessgerät oder ein Durchflussmessgerät.

Insbesondere kann es sich bei dem Feldgerät um ein Füllstandradar handeln, der freistrahlende elektromagnetische Wellen aussendet oder auf dem Prinzip der geführten Mikrowellen basiert.

Gemäß einem weiteren Aspekt der Erfindung ist ein Server für ein oben und im Folgenden beschriebenes Feldgerät angegeben.

Beispielsweise weist der Server einen Datenspeicher auf, in welchem Informationen über den späteren Zeitpunkt für das Überführen des Feldgeräts von dem Energiesparmodus in den Sende-/Empfangsmodus gespeichert werden.

Gemäß einem weiteren Aspekt der Erfindung ist ein Messsystem angegeben, welches ein oder mehrere der oben und im Folgenden beschriebenen Feldgeräte und einen oben und im Folgenden beschriebenen Server aufweist. Die einzelnen Komponenten des Messsystems können über das Internet miteinander kommunizieren. Auch kann das Messsystem Service-PCs und Kunden-PCs aufweisen, die mit dem Messgerät und/oder dem Server kommunizieren können, beispielsweise um eine Fernwartung am Feldgerät, eine Fehlerdiagnose, eine Feldgeräteparametrierung oder eine Messwertabfrage durchzuführen.

Gemäß einem weiteren Aspekt der Erfindung ist ein Verfahren zum Einrichten einer temporären Empfangsbereitschaft eines Feldgeräts der Prozessautomatisierung angegeben, bei dem Informationen für einen Zeitpunkt zum Überführen des Feldgeräts von einem Energiesparmodus in einen Sende-/Empfangsmodus in einem Server gespeichert werden. Diese Informationen können beispielsweise lediglich den Startzeitpunkt für den Sende-/Empfangsmodus festlegen. Auch können diese Informationen aber ein komplettes Zeitintervall festlegen, währenddessen sich das Feldgerät im Sende-/Empfangsmodus befindet. Nach Ablauf dieses Zeitintervalls schaltet es dann zurück in den Energiesparmodus.

Diese Informationen kann der Server selber generieren, beispielsweise wenn er feststellt, dass das Feldgerät zu einem bestimmten Zeitpunkt des Tages fehlerhaft arbeitet. Auch können diese Informationen von einem Benutzer generiert werden, der beispielsweise eine Wartung des Feldgeräts zu einem bestimmten Zeitpunkt durchführen möchte.

Das Feldgerät wechselt beispielsweise zeitgesteuert und/oder ereignisgesteuert von dem Energiesparmodus in den Sende-/Empfangsmodus. Danach baut das Feldgerät eine Verbindung zum Server auf, um dem Server Messdaten zu übermitteln. Diese Messdaten oder Messwerte werden dann im Server empfangen und der Server kann zu diesem Zeitpunkt (oder kurz davor oder kurz danach Informationen an das Feldgerät übermitteln. Diese Informationen betreffen den oben geschilderten Zeitpunkt zum Überführen des Feldgeräts von dem Energiesparmodus in den Sende-/Empfangsmodus.

Daraufhin baut das Feldgerät eine Verbindung zum Server ab und wechselt von dem Sende-/Empfangsmodus in den Energiesparmodus. Wenn nun der vom Server festgelegte Zeitpunkt erreicht ist, wechselt das Feldgerät automatisch von dem Energiesparmodus zurück in den Sende-/Empfangsmodus, so dass beispielsweise eine Fernwartung erfolgen kann. Wird der Endzeitpunkt des für den Sende-/Empfangsmodus vorgesehenen Zeitfensters erreicht, wechselt das Feldgerät zurück in den Energiesparmodus.

Gemäß einer Ausführungsform der Erfindung kann das Zeitfenster wahlweise verlängert oder verkürzt werden, während sich das Feldgerät im Sende-/Empfangsmodus befindet. Dieses Verlängern oder Verkürzen des Zeitfensters kann beispielsweise von einem entfernten Benutzer getriggert sein oder automatisch erfolgen, falls das Feldgerät feststellt, dass die Fernwartung noch nicht vollendet ist. Ist der Prozess der Fernwartung abgeschlossen, sendet der Server oder der entsprechende Benutzer-PC ein Signal an das Feldgerät, woraufhin es dann wieder den Energiesparmodus einnimmt. Das Feldgerät wird in diesem Fall also von externer Stelle aufgefordert, wieder in den Energiesparmodus zu schalten.

Gemäß einem weiteren Aspekt der Erfindung sind Programmelemente angegeben, die, wenn sie auf Prozessoren eines Messsystems ausgeführt werden, das Messsystem anleiten, die oben und im Folgenden beschriebenen Schritte durchzuführen.

Auf den verschiedenen Prozessoren des Messsystems können die selben Programmelemente gespeichert sein. Auch ist es möglich, dass einzelne Prozessoren unterschiedliche Programmelemente aufweisen. Beispielsweise können die im Server gespeicherten Programmelemente andere sein, als die im Feldgerät gespeicherten Programmelemente, da beide Komponenten verschiedene Aufgaben zu erfüllen haben. Insgesamt wirken sämtliche Programmelemente so zusammen, dass das Messsystem die erfindungsgemäßen Verfahrensschritte durchführen kann.

Gemäß einem weiteren Aspekt der Erfindung ist ein computerlesbares Medium angegeben, auf dem die oben und im Folgenden beschriebenen Programmelemente gespeichert sind.

Die Programmelemente können Teil einer Software sein, die auf den Prozessoren des Messsystems gespeichert ist. Die Prozessoren können dabei ebenso Gegenstand der Erfindung sein. Weiter umfasst die Erfindung Programmelemente, welche schon von Anfang an die Erfindung verwenden, sowie auch Programmelemente, welche durch eine Aktualisierung (Update) ein bestehendes Programm zur Verwendung der Erfindung veranlassen.

Im Folgenden werden mit Verweis auf die Figuren Ausführungsbeispiele der Erfindung beschrieben.

Kurze Beschreibung der Figuren
Fig. 1 zeigt ein Messsystem 100 gemäß einem Ausführungsbeispiel der Erfindung.
Fig. 2 zeigt ein Zeitablaufdiagramm eines Verfahrens gemäß einem Ausführungsbeispiel der Erfindung.
Fig. 3 zeigt ein Flussdiagramm eines Verfahrens gemäß einem Ausführungsbeispiel der Erfindung.
Fig. 4 zeigt unterschiedliche Feldgeräte gemäß Ausführungsbeispielen der Erfindung.

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

### Detaillierte Beschreibung von Ausführungsbeispielen

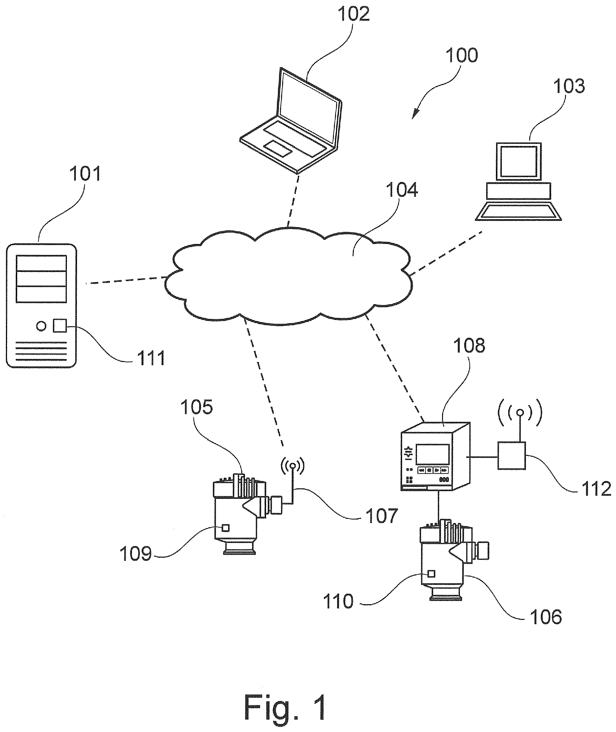

Fig. 1 zeigt ein Messsystem 100 gemäß einem Ausführungsbeispiel der Erfindung. Das Messsystem 100 ist beispielsweise ein VEGA WEB-VV-System, welches einen WEB -VV-Server 101, einen Service-PC 102, einen Kunden-PC 103, ein erstes Feldgerät in Form eines Sensors 105 und ein zweites feldgerät in Form eines Auswerte- und Bediengeräts 108 mit angeschlossenem Sensor 106 aufweist. Sämtliche Komponenten des Messsystems sind über das Internet 104 miteinander verbunden.

Bei diesem System sendet der Sensor 105 oder das Auswerte- und Bediengerät 108, an dem der Sensor 106 angeschlossen ist, ereignisgesteuert Messwerte zum WEB-VV-Server 101. Der WEB-VV-Server 101 speichert die Messwerte in einer Datenbank 111. Die Messwerte können mittels eines Webbrowsers vom Kunden-PC 103 oder Service-PC 102 über das Internet 104 abgerufen werden.

Zur drahtlosen Kommunikation mit dem Server, dem Kunden-PC oder dem Service-PC weist das Feldgerät 105 eine Drahtlosschnittstelle 107 in Form einer Sende-/Empfangseinheit auf. Weiter weist das Feldgerät eine Steuereinheit 109 auf, welche zur Steuerung des Messprogramms ausgeführt ist.

Ebenso weist das Feldgerät 106 eine entsprechende Steuereinheit 110 auf. Das Feldgerät 106 ist an die Auswerte- und Bedieneinheit 108 angeschlossen, welche wiederum an die externe Drahtlosschnittstelle (Sende- und Empfangseinheit) 112 angeschlossen ist.

Zusätzlich hierzu können die Feldgeräte auch mit einem Datenbus verbunden sein.

Wenn sich der Sensor 105 oder der Sensor 106 mit der Auswerte- und Bedieneinheit 108 im Sende-/Empfangsmodus befinden, kann mit dem Service-PC 102 und der darauf installierten Software zum Bedienen der Geräte (z. B. PACTware/DTM) auf die Geräte zugegriffen werden. Es ist dann möglich, Diagnoseinformationen auszulesen, Einstellungen zu ändern und Softwareupdates durchzuführen.

Bei dem Sensor 105 handelt es sich um einen Sensor mit integriertem Funkmodul, beispielsweise in Form eines GPRS-Modems 107, und einer Batterieversorgung. Der Sensor 105 hat in der Betriebsart "Energiesparmodus" unterschiedliche Betriebsmoden, nämlich einen Sende- und Empfangsmodus und einen Energiesparmodus.

Im Sende- und Empfangsmodus kann der Sensor 105 Daten, beispielsweise Messwerte, an den Web-VV-Server 102 senden. In diesem Modus ist es auch möglich, den Sensor mit einem Service-PC 102 über das Internet zu erreichen, um Daten abzurufen oder zu verändern.

Im Energiesparmodus ist das Funkmodul des Sensors 105 deaktiviert um Energie zu sparen. Da das Funkmodul 107 des Sensors 105 abgeschaltet ist, ist es in diesem Modus nicht möglich, den Sensor über das Internet zu erreichen. Um Messwerte zu versenden, wechselt der Sensor ereignisgesteuert (beispielsweise zeitgesteuert oder messwertgesteuert) in den Sende-/Empfangsmodus. Nachdem die Daten versendet werden, wechselt der Sensor wieder selbstständig in den Energiesparmodus. Dadurch, dass der Sensor nur für eine kurze Zeit in den Sende- und Empfangsmodus wechselt, erhöht sich die Laufzeit bis zum Wechsel der Batterie erheblich.

Der Nachteil dieser Betriebsart besteht darin, dass der Sensor im Energiesparmodus von externen Geräten, wie beispielsweise dem Server, nicht erreicht werden kann.

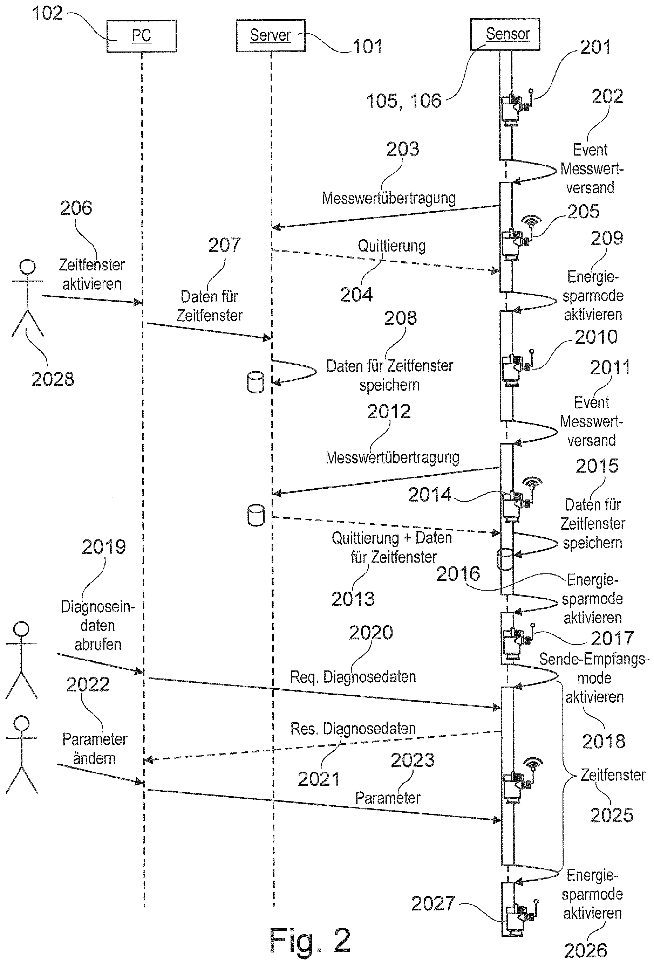

Um dies zu ermöglichen, kann der Sensor 105 (und im Übrigen natürlich auch der Sensor 106) aus der Ferne innerhalb eines vorgegebenen Zeitfensters in den Sende-/Empfangsmodus versetzt werden. Dazu kommt das in Fig. 2 dargestellte Verfahren zum Einsatz.

In Fig. 2 ist zu erkennen, dass der Sensor sich zunächst im Energiesparmodus 201 befindet. Durch ein Ereignis (beispielsweise das Erreichen eines bestimmten Zeitpunkts) wird ein Messwertversand 202 ausgelöst. Dazu wechselt der Sensor in den Sende-/Empfangsmodus 205 und startet die Messwertübertragung 203 zum Web-VV-Server. Der Web-VV-Server quittiert den Erhalt der Messwertdaten 204. Nach der Quittierung wechselt der Sensor wieder in den Energiesparmodus 209, 2010.

Aufgrund eines Problems der Messung, welches beispielsweise immer zum gleichen Zeitpunkt auftritt, benötigt der Servicetechniker 2028 Zugriff auf den Sensor, und zwar genau zu dem Zeitpunkt, an dem das Problem auftritt. Da der Sensor sich aber im Energiesparmodus befindet, kann kein Zugriff erfolgen. Damit der Zugriff zu einem bestimmten Zeitpunkt erfolgen kann, aktiviert der Servicetechniker 2028 für den Sensor ein Zeitfenster, während welchem der Sensor in den Sende-/Empfangsmodus wechselt. Da der Sensor aktuell aber nicht erreichbar ist, werden die Daten für das Zeitfenster zunächst auf dem Web-VV-Server zwischengespeichert, wie durch die Pfeile 206, 207, 208 angedeutet.

Sobald der Sensor aufgrund einer Messwertübertragung in den Sende-/Empfangsmodus wechselt (2011) und Messwerte zum WEB-VV-Server überträgt (2012), werden zusätzlich zur Quittierung noch die Daten für das Zeitfenster zum Sensor übertragen (2013). Der Sensor speichert diese Daten ab (2015) und setzt einen Alarm für den Startzeitpunkt des Zeitfensters 2025.

Danach wechselt der Sensor wieder in den Energiesparmodus 2016. Sobald der Startzeitpunkt des Zeitfensters 2025 erreicht ist, wechselt der Sensor in den Sende-/Empfangsmodus 2018. In diesem Modus ist der Sensor jetzt über das Internet erreichbar. Der Servicetechniker kann jetzt direkt über das Internet Diagnosedaten mit dem PC aus dem Sensor abrufen, wie dies durch die Pfeile 2019, 2020 und 2021 symbolisiert ist.

Aufgrund der Diagnosedaten kann der Servicetechniker jetzt auch Parameter im Sensor ändern (2022 und 2023). Nach Ablauf des Zeitfensters 2025 wechselt der Sensor wieder automatisch in den Energiesparmodus 2026, 2027. Der Wechsel kann auch verzögert werden, solange noch Daten zwischen dem Sensor und dem PC ausgetauscht werden. Genauso kann das Zeitfenster auch verkürzt werden, wenn der Servicetechniker vorzeitig mit der Wartung fertig ist.

Es handelt sich also um ein Verfahren, um aus der Ferne ein Zeitfenster zum Empfangen und Senden von Daten an ein Feldgerät zu aktivieren. Bei dem Feldgerät handelt es sich z. B. um ein batteriegespeistes Gerät, das normalerweise nur in einem kurzen Zeitintervall Daten an einen Fernserver überträgt. Die restliche Zeit ist das Gerät nicht erreichbar, da es sich im Energiesparmodus befindet und in diesem Zustand weder Daten empfangen noch senden kann.

Mittels des Verfahrens ist es möglich, dem Gerät aus der Ferne mitzuteilen, dass es zu einem bestimmten Zeitpunkt aus dem Energiesparmodus in den Empfangsmodus wechseln soll, damit es aus der Ferne zum Parametrieren, Updaten oder für Diagnosezwecke erreichbar ist.

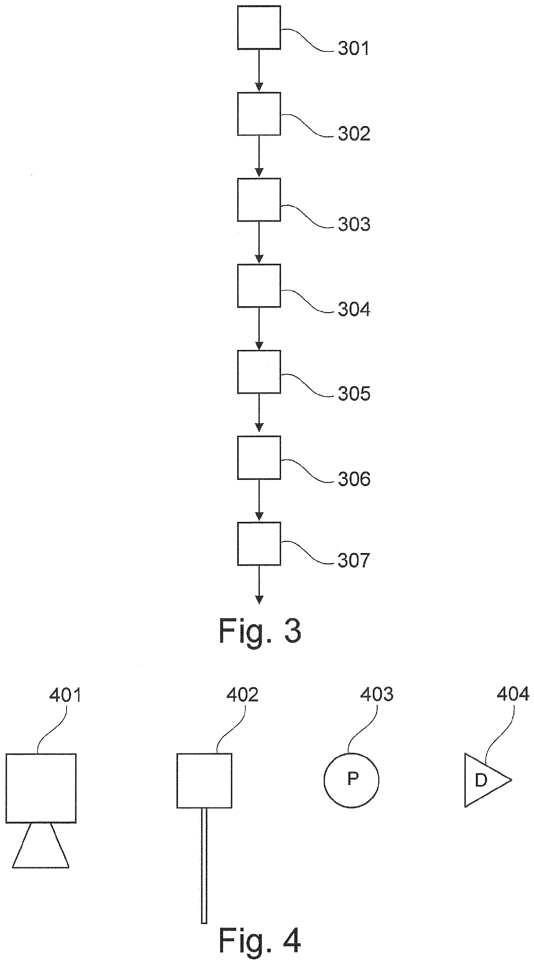

Fig. 3 zeigt ein Flussdiagramm eines Verfahrens gemäß einem Ausführungsbeispiel der Erfindung. Im Schritt 301 werden Daten für das Zeitfenster für den Sende-/Empfangsmodus im Server gespeichert. Im Schritt 302 wechselt das Feldgerät zeit- oder ereignisgesteuert vom Energiesparmodus in den Sende-/Empfangsmodus und nimmt Verbindung zum Server auf, um diesem Messdaten zu übermitteln. Im Schritt 303 empfängt der Server optional die Messdaten und teilt dem Feldgerät die gespeicherten Daten für das Zeitfenster mit. Im Schritt 304 empfängt das Feldgerät die Daten für das Zeitfenster und baut danach die Verbindung zum Server wieder ab. Das Feldgerät wechselt wieder in den Energiesparmodus.

Im Schritt 305 wird der Startzeitpunkt des Zeitfensters erreicht und das Feldgerät wechselt selbstständig vom Energiesparmodus in den Sende-/Empfangsmodus.

Im Schritt 306 ist das Feldgerät ab diesem Zeitpunkt bis zum Ende des Zeitfensters aus der Ferne erreichbar. Es können nun Daten im Feldgerät gelesen oder geschrieben werden. Solche Daten können z. B. Diagnoseinformationen, wie Echokurven, sein.

Im Schritt 307 ist der Endzeitpunkt des Zeitfensters erreicht und das Feldgerät wechselt wieder automatisch in den Energiesparmodus. Es besteht jedoch die Möglichkeit, während das Feldgerät sich noch im Sende-/Empfangsmodus befindet, dieses Zeitfenster manuell oder automatisch zu verlängern oder auch zu verkürzen.

Somit besteht die Möglichkeit, das Zeitfenster für den Sende-/Empfangsmodus aus der Ferne vorzugeben. Damit ist es möglich, zu einem bestimmten Zeitpunkt Zugriff auf das Feldgerät zu erhalten. Bedingung ist, dass das Zeitfenster hinter dem nächsten Zeitpunkt für einen Messwertdatenaustausch zwischen dem Feldgerät und dem Server liegt.

Fig. 4 zeigt verschiedene Feldgeräte, welche zur Durchführung des erfindungsgemäßen Verfahrens ausgeführt sein können. Hierbei handelt es sich um ein Füllstandradar 401, der freistrahlende elektromagnetische Signale aussendet. Auch kann es sich bei dem Feldgerät um ein Messgerät 402 handeln, welches geführte Mikrowellen aussendet. Darüber hinaus kann es sich bei dem Feldgerät um ein Druckmessgerät 403 oder ein Durchflussmessgerät 404 handeln.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Messsystem (100) mit einem Feldgerät (105, 106, 108) zum Messen einer Prozessgröße und einem Server (101) eingerichtet zur Fernwartung des Feldgeräts und zur Übertragung von Informationen zu dem Feldgerät, welche einen späteren Zeitpunkt für das Überführen des Feldgeräts (105, 106, 108) von einem Energiesparmodus in einen Sende-/Empfangsmodus zum Durchführen einer Fernwartung definieren, das Feldgerät (105, 106, 108) aufweisend:
eine Sende- und Empfangseinheit (107, 112) zum Senden von Messwerten an einen Server (101) und zum Empfangen von Daten von dem Server (101);
eine Steuereinheit (109, 110) zum Überführen des Feldgeräts (105, 106, 108) von einem Energiesparmodus, in dem kein Zugriff auf das Feldgerät (105, 106, 108) erfolgen kann, in einen Sende-/Empfangsmodus, in dem die Messwerte an den Server (101) versendbar sind und in dem der Zugriff erfolgen kann, und umgekehrt;
wobei das Feldgerät (105, 106, 108) dazu eingerichtet ist, zeit- oder ereignisgesteuert einen Messwerteversand auszulösen, für den das Feldgerät (105, 106, 108) von dem Energiesparmodus in den Sende-/Empfangsmodus wechselt,
wobei die Steuereinheit (109, 110) dazu eingerichtet ist, die Informationen von dem Server (101) mitgeteilt zu bekommen,
- während sich das Feldgerät (105, 106, 108) in dem Sende-/ Empfangsmodus befindet und
- nach einer Verbindungsaufnahme des Feldgeräts (105, 106, 108) zum Server (101).

2. Messsystem nach Anspruch 1, das Feldgerät (105, 106, 108) weiterhin aufweisend:
eine feldgeräteinterne Energieversorgung.

3. Messsystem nach einem der vorhergehenden Ansprüche,
wobei die Sende- und Empfangseinheit (107, 112) zum drahtlosen Senden und Empfangen der Daten ausgeführt ist.

4. Messsystem nach einem der vorhergehenden Ansprüche, wobei das Feldgerät (105, 106, 108) ausgeführt ist als Füllstandmessgerät, Druckmessgerät oder Durchflussmessgerät.

5. Messsystem nach einem der vorhergehenden Ansprüche, der Server (101) aufweisend einen Datenspeicher (111), in welchem die Informationen über den späteren Zeitpunkt für das Überführen des Feldgeräts (105, 106, 108) von dem Energiesparmodus in den Sende-/ Empfangsmodus gespeichert sind.

6. Verfahren zum Einrichten einer temporären Empfangsbereitschaft eines Feldgeräts (105, 106, 108) der Prozessautomatisierung zur Fernwartung des Feldgeräts (105, 106, 108), das Verfahren aufweisend die folgenden Schritte:
Speichern von Informationen in einem Server (101), welche einen späteren Zeitpunkt für das Überführen des Feldgeräts (105, 106, 108) von einem Energiesparmodus, in dem kein Zugriff auf das Feldgerät (105, 106, 108) erfolgen kann, in einen Sende-/ Empfangsmodus, in dem Messdaten an den Server (101) versendbar sind und in dem der Zugriff erfolgen kann, definieren;
zeit- oder ereignisgesteuertes Wechseln des Feldgeräts (105, 106, 108) von dem Energiesparmodus in den Sende-/ Empfangsmodus;
Verbindungsaufnahme des Feldgeräts (105, 106, 108) zum Server (101);
Übermitteln der Informationen von dem Server (101) an das Feldgerät (105, 106, 108);
Abbauen der Verbindung zwischen Feldgerät (105, 106, 108) und Server (101);
Wechseln des Feldgeräts (105, 106, 108) von dem Sende-/ Empfangsmodus in den Energiesparmodus;
Wechseln des Feldgeräts (105, 106, 108) von dem Energiesparmodus in den Sende-/ Empfangsmodus, wenn der Zeitpunkt erreicht ist;
Durchführen einer Fernwartung;
Wechseln des Feldgeräts (105, 106, 108) in den Energiesparmodus nach Erreichen eines Endzeitpunkts eines für den Sende-/ Empfangsmodus vorgesehenen Zeitfensters.

7. Verfahren nach Anspruch 6, weiterhin aufweisend den Schritt:
Verlängern oder Verkürzen des Zeitfensters, während sich das Feldgerät (105, 106, 108) im Sende-/ Empfangsmodus befindet.

8. Programmelemente, die, wenn sie auf Prozessoren eines Messsystems (100) ausgeführt werden, das Messsystem anleiten die Schritte gemäß Anspruch 6 oder 7 durchzuführen.

9. Computerlesbares Medium, auf dem Programmelemente gespeichert sind, die, wenn sie auf Prozessoren eines Messsystems (100) ausgeführt werden, das Messsystem anleiten die Schritte gemäß Anspruch 6 oder 7 durchzuführen.

## Claims

1. A measuring system (100) with a field device (105, 106, 108) for measuring a process variable, and a server (101) configured for remote maintenance of the field device and for transferring information, which define a later time for transferring the field device from power-saving mode to transmit/receive mode for conducting a remote maintenance, to the field device, the field device (105, 106, 108) comprising:
a transmit/receive unit (107, 112) for transmitting measurement data to a server (101) and for receiving data from the server (101); and
a control unit (109, 110) for transferring the field device (105, 106, 108) from power-saving mode, in which the field device (105, 106, 108) cannot be accessed, to transmit/receive mode, in which the field device (105, 106, 108) can be accessed, and vice versa;
wherein the field device (105, 106, 108) is configured to activate time- or event-driven a transmitting of measured data, for which the field device (105, 106, 108) changes from the power-saving mode to the transmit/receive mode, wherein the control unit (109, 110) is configured to receive the information from the server (101),
- while the field device (105, 106, 108) is in the transmit/receive mode, and
- after having established a connection of to the field device (105, 106, 108) the server (101).

2. The measuring system (100) according to claim 1, further comprising:
a power supply situated inside of the field device.

3. The measuring system (100) according to claim 1,
wherein the transmit/receive unit (107, 112) is configured to send and receive the data wirelessly.

4. The measuring system (100) according to any one of the preceding claims, wherein the field device (105, 106, 108) includes at least one of: a level measuring instrument, a pressure measuring instrument and a flow measuring instrument.

5. The measuring system (100) according to any one of the preceding claims, comprising a data storage device (111) storing the information about the later time for transferring the field device (105, 106, 108) from power-saving mode to transmit/receive mode.

6. A method for setting up temporary readiness of a field device (105, 106, 108) for process automation, for remote maintenance of the field device (105, 106, 108), the method comprising the following steps:
storing of information in a server (101), which define a later time for transferring the field device (105, 106, 108) from power-saving mode, in which the field device (105, 106, 108) cannot be accessed, to transmit/receive mode, in which the measurement data can be sent to the server (101) and in which access is possible;
time- or event-driven transferring of the field device (105, 106, 108) from power-saving mode to transmit/receive mode;
connecting the field device (105, 106, 108) to the server (101);
transferring the information from the server (101) to the field device (105, 106, 108);
terminating the connection between the field device (105, 106, 108) and the server (101);
transferring the field device (105, 106, 108) from transmit/receive mode to power-saving mode;
transferring the field device (105, 106, 108) from power-saving mode to transmit/receive mode when the time is reached;
conducting a remote maintenance; and
transferring the field device (105, 106, 108) to power-saving mode after reaching an end time of a time window provided for transmit/receive mode.

7. The method according to claim 6, further comprising the step:
prolonging or shortening the time window while the field device (105, 106, 108) is in the transmit/receive mode.

8. Program elements, which, when they are executed on one or more processors of a measuring system (100), instruct the measuring system (100) to perform the steps according to step 6 or 7.

9. A machine-readable medium, on which program elements are stored, which, when they are executed on processors of a measuring system (100), instruct the measuring system (100) to perform the steps according to step 6 or 7.

## Revendications

1. Système de mesure (100) comportant un appareil de terrain (105, 106, 108) destiné à mesurer une grandeur de processus, et un serveur (101) configuré pour la télémaintenance de l'appareil de terrain et pour la transmission d'informations à l'appareil de terrain, qui définissent un moment ultérieur pour le transfert de l'appareil de terrain (105, 106, 108) d'un mode d'économie d'énergie à un mode d'émission/réception afin d'effectuer une télémaintenance, l'appareil de terrain (105, 106, 108) comportant :
une unité d'émission/réception (107, 112) destinée à envoyer des valeurs de mesure à un serveur (101) et à recevoir des données du serveur (101) ;
une unité de commande (109, 110) destinée à faire passer l'appareil de terrain (105, 106, 108) d'un mode d'économie d'énergie, dans lequel aucun accès à l'appareil de terrain (105, 106, 108) ne peut avoir lieu, à un mode d'émission/réception, dans lequel les valeurs de mesure peuvent être envoyées au serveur (101) et dans lequel l'accès peut avoir lieu, et inversement ;
l'appareil de terrain (105, 106, 108) étant configuré pour déclencher, par commande temporelle ou événementielle, un envoi de valeurs de mesure, pour lequel l'appareil de terrain (105, 106, 108) passe du mode d'économie d'énergie au mode d'émission/réception,
l'unité de commande (109, 110) étant configurée pour obtenir les informations du serveur (101),
- pendant que l'appareil de terrain (105, 106, 108) se trouve dans le mode d'émission/réception et
- après l'établissement d'une connexion de l'appareil de terrain (105, 106, 108) au serveur (101).

2. Système de mesure selon la revendication 1, l'appareil de terrain (105, 106, 108) comportant en outre :
une alimentation en énergie interne à l'appareil de terrain.

3. Système de mesure selon l'une des revendications précédentes,
dans lequel l'unité d'émission et de réception (107, 112) est réalisée pour l'émission et la réception sans fil des données.

4. Système de mesure selon l'une des revendications précédentes, dans lequel l'appareil de terrain (105, 106, 108) est réalisé sous la forme d'un mesureur de niveau, d'un manomètre ou d'un débitmètre.

5. Système de mesure selon l'une des revendications précédentes, le serveur (101) comportant une mémoire de données (111), dans laquelle sont enregistrées les informations sur le moment ultérieur pour le transfert de l'appareil de terrain (105, 106, 108) du mode d'économie d'énergie au mode d'émission/réception.

6. Procédé de création d'un état de réception temporaire d'un appareil de terrain (105, 106, 108) de l'automatisation des processus, pour la télémaintenance de l'appareil de terrain (105, 106, 108), le procédé comportant les étapes suivantes :
enregistrement d'informations dans un serveur (101), qui définissent un moment ultérieur pour le transfert de l'appareil de terrain (105, 106, 108) d'un mode d'économie d'énergie, dans lequel aucun accès à l'appareil de terrain (105, 106, 108) ne peut avoir lieu, à un mode d'émission/réception, dans lequel les valeurs de mesure peuvent être envoyées au serveur (101) et dans lequel l'accès peut avoir lieu ;
passage, par commande temporelle ou événementielle, de l'appareil de terrain (105, 106, 108) du mode d'économie d'énergie au mode d'émission/réception ;
établissement d'une connexion de l'appareil de terrain (105, 106, 108) au serveur (101) ;
transmission des informations du serveur (101) à l'appareil de terrain (105, 106, 108) ;
coupure de la connexion entre l'appareil de terrain (105, 106, 108) et le serveur (101) ;
passage de l'appareil de terrain (105, 106, 108) du mode d'émission/réception au mode d'économie d'énergie ;
passage de l'appareil de terrain (105, 106, 108) du mode d'économie d'énergie au mode d'émission/réception, quand le moment est atteint ;
exécution d'une télémaintenance ;
passage de l'appareil de terrain (105, 106, 108) en mode d'économie d'énergie après qu'un moment de fin d'un intervalle de temps prévu pour le mode d'émission/réception a été atteint.

7. Procédé selon la revendication 6, comportant en outre l'étape :
prolongation ou réduction de l'intervalle de temps, pendant que l'appareil de terrain (105, 106, 108) se trouve dans le mode d'émission/réception.

8. Éléments de programme, qui, quand ils sont exécutés sur des processeurs d'un système de mesure (100), donnent au système de mesure l'instruction d'exécuter les étapes selon la revendication 6 ou 7.

9. Support lisible par ordinateur, sur lequel sont enregistrés des éléments de programme, qui, quand ils sont exécutés sur des processeurs d'un système de mesure (100), donnent au système de mesure l'instruction d'exécuter les étapes selon la revendication 6 ou 7.
